Europäisches Patentamt

European Patent Office

Office européen des brevets

(19)

(11) Numéro de publication : **0 172 756 B1**

(12) **FASCICULE DE BREVET EUROPÉEN**

(45) Date de publication du fascicule du brevet :
17.08.88

(21) Numéro de dépôt : 85400182.3

(22) Date de dépôt : 04.02.85

(51) Int. Cl.⁴ : **C 01 B 13/11**

(54) **Appareil générateur d'effluves électriques, en particulier pour la production d'ozone.**

(30) Priorité : 06.03.84 FR 8403464

(43) Date de publication de la demande :
26.02.86 Bulletin 86/09

(45) Mention de la délivrance du brevet :
17.08.88 Bulletin 88/33

(84) Etats contractants désignés :
**BE CH DE GB IT LI**

(56) Documents cités :
**DE-A- 2 354 209
DE-B- 1 028 544
US-A- 2 822 327
US-A- 2 990 602
US-A- 4 013 567**

(73) Titulaire : **"DEGREMONT" Société dite:**
**183, Avenue du 18 Juin 1940**
**F-92508 Rueil-Malmaison Cedex (FR)**

(72) Inventeur : **Benas, Jean-Marie**
**20, rue Gustave Flaubert**
**F-92500 Rueil-Malmaison (FR)**
Inventeur : **Coste, Christian**
**79A, rue des Chantiers**
**F-78000 Versailles (FR)**
Inventeur : **Louboutin, Robert**
**La Duché - Route des Flambertins**
**F-78121 Crespières (FR)**

(74) Mandataire : **Armengaud, Charles**
**Cabinet ARMENGAUD AINE 3, Avenue Bugeaud**
**F-75116 Paris (FR)**

Jouve, 18, rue St-Denis, 75001 Paris, France

**0 172 756**

**Description**

La présente invention concerne les « effluveurs », appareils générateurs d'effluves électriques dans lesquels un gaz en circulation est soumis à un champ électrique induisant une décharge du type Corona avec formation d'un plasma froid où prennent naissance de nouvelles espèces moléculaires à durée de vie plus ou moins longue, utilisables en particulier pour la fabrication d'ozone à partir d'oxygène pur ou d'air atmosphérique par exemple.

L'appareil suivant l'invention est du type des appareils tubulaires utilisés de façon bien connue pour la fabrication d'ozone et comportant une pluralité de tubes alimentés parallèlement en gaz et en énergie électrique.

Chacun de ces tubes est constitué de façon connue d'un diélectrique généralement en verre d'un diamètre de 50 à 80 mm, d'épaisseur aussi constante que possible, de l'ordre de 2 mm, d'une longueur utile de l'ordre du mètre, fermé à l'une de ses extrémités et revêtu intérieurement d'une couche métallique conductrice, ce tube de verre appelé « électrode haute tension » étant entouré d'un tube métallique constituant une électrode basse tension, de telle sorte qu'un intervalle de quelques millimètres appelé « intervalle de décharge » se trouve aménagé entre les deux tubes, intervalle dans lequel circule de l'oxygène ou un gaz qui en contient, et dans lequel est créé un champ électrique alternatif. Ce champ dérive d'une tension alternative généralement comprise entre 10.000 et 20.000 volts appliquée entre la couche métallique interne du tube de verre et le tube métallique qui l'entoure de façon à provoquer la décharge Corona.

Dans ces appareils se pose un problème de refroidissement car seulement une fraction n'excédant pas 10 à 15 % de la puissance appliquée correspond à l'énergie de formation de l'ozone. Si l'on veut parvenir à des densités de puissance élevées (la densité de puissance est la puissance par unité de surface de diélectrique) et obtenir une production importante d'ozone, il faut donc diminuer l'importance des phénomènes thermiques qui, au-delà d'une certaine puissance appliquée à l'appareil, induisent une décroissance de la production d'ozone.

Ce problème est mal résolu dans les effluveurs classiques du fait que seule l'électrode basse tension métallique est refroidie, des difficultés d'ordre technologique, liées d'une part à l'importance des tolérances dimensionnelles qu'impose la technique de fabrication des tubes en verre, et d'autre part, à la sensibilité à la rupture, sous l'effet du champ électrique, des diélectriques en verre de haute permittivité lorsqu'ils sont en contact avec l'eau, interdisant pratiquement le refroidissement dans des conditions économiques acceptables de l'électrode de verre qui constitue cependant le point le plus chaud du système.

Par ailleurs, la puissance transitant dans un effluveur est limitée par la valeur maximale de la tension qui lui est appliquée avant que n'apparaissent des phénomènes de contournement électrique et d'aigrettage.

L'obtention de densités de puissance plus élevées que celles obtenues dans des effluveurs classiques implique donc une diminution sensible de l'impédance du diélectrique solide et, par conséquent, le choix d'un matériau de grande permittivité. Le verre généralement utilisé a une permittivité maximale de 7, comme indiqué dans le document US-A-2 822 327.

De ce fait, et compte tenu des considérations précédentes sur le refroidissement des diélectriques, la puissance appliquée aux effluveurs classiques de production d'ozone est actuellement limitée à une valeur de l'ordre de 2 à 3 kW/m².

L'utilisation de diélectriques en matériaux autres que le verre a déjà été décrite, par exemple le verre émaillé ou le mica ; cependant, l'utilisation de ces matériaux ne permet pas d'obtenir un rendement énergétique très élevé.

Un autre matériau connu comme diélectrique est la céramique, dont l'utilisation dans un effluveur du type tubulaire, qui impose la réalisation de tubes de diamètre précis et d'épaisseur faible et uniforme, n'a jamais été décrite de façon précise.

Par ailleurs, les études récentes en matière de réactions dans l'effluve ont montré que, pour une réaction donnée, il existait un minimum énergétique correspondant à une certaine valeur du champ réduit appliqué, le champ réduit étant, par définition, le rapport du champ électrique au nombre de molécules de réactant présent dans l'effluve. L'approche de ce minimum énergétique suppose donc la fixation du champ électrique à sa valeur optimale, qui, pour la réaction de formation de l'ozone à partir d'air ou d'oxygène, a été trouvée correspondre à un intervalle de l'ordre du millimètre ou inférieur.

L'obtention de telles valeurs à l'échelle industrielle ne peut pratiquement pas être assurée dans un appareil classique comportant un grand nombre d'effluveurs élémentaires, du fait de l'impossibilité de fabriquer des tubes en verre de 50 à 80 mm de diamètre, et de plus, d'un mètre de longueur, dont la tolérance sur la valeur du diamètre soit suffisamment faible pour être compatible avec la réalisation d'un intervalle inférieur au millimètre, ou de cet ordre, entre ces tubes de verre et les tubes métalliques qui les entourent.

L'effluveur objet de la présente invention pallie les inconvénients des effluveurs classiques et permet, en particulier, la réalisation de tels intervalles de décharge et l'application de densités de puissance élevées, et donc la production de grandes quantités d'ozone par unité de surface de diélectrique, dans

2

des conditions de rendement énergétique nettement améliorées.

L'appareil générateur d'effluves électriques, en particulier pour la production d'ozone à partir d'oxygène pur, d'air atmosphérique ou d'air enrichi en oxygène, comportant au moins un tube diélectrique et dont l'électrode haute tension est constituée par un cylindre en céramique, revêtu intérieurement d'une couche métallique conductrice et entouré d'un tube métallique constituant une électrode basse tension, est caractérisé en ce que le cylindre constituant l'électrode haute tension est en céramique de haute permittivité, avantageusement comprise entre 7 et 30, d'épaisseur uniforme et au plus égale à 5 mm, de diamètre extérieur tel que l'intervalle de décharge entre cette électrode haute tension et l'électrode basse tension ait une largeur de 0,6 à 1,5 mm, suivant le gaz, ou le mélange de gaz, soumis à l'effluve.

Suivant l'invention, le cylindre en céramique d'épaisseur uniforme et au plus égale à 5 mm est réalisé, par exemple, par la technique connue de l'isopressage et rectifié après cuisson.

Suivant l'invention, la céramique usinée utilisée comme diélectrique a une permittivité dont la valeur, comprise entre 7 et 30, est inférieure à la valeur de permittivité au-delà de laquelle la décharge dans l'air n'est plus du type Corona.

On a découvert en effet que, lorsque le gaz soumis à l'effluve n'est plus de l'oxygène pur mais un mélange d'oxygène et d'azote de cencentration en azote d'au moins 20 %, au-delà d'une certaine valeur de permittivité de la céramique, il se produit, à densité de puissance égale, une forte diminution de la production d'ozone coïncidant avec une formation importante d'oxydes d'azote, cette chute de production croissant au fur et à mesure que la composition du gaz se rapproche de celle de l'air atmosphérique ; on a pu montrer dans ce cas une augmentation de la chute de tension dans l'intervalle de décharge en fonction de l'accroissement de la puissance appliquée, ce qui indique qu'il ne s'agit plus alors d'une décharge du type Corona pour laquelle il est connu que la chute de tension n'est fonction que du produit :

P (Pression) × d (Intervalle de décharge pour un gaz donné) (Loi de Paschen).

Suivant une caractéristique de l'invention, afin de permettre l'application de densités de puissance élevées, l'appareil est muni d'un double circuit de refroidissement comportant un circuit fermé de refroidissement par circulation d'eau déminéralisée à l'intérieur de l'électrode haute tension en céramique usinée qui constitue l'élément le plus chaud du système, et un circuit de refroidissement de l'électrode basse tension par circulation d'eau entre cette électrode et le tube métallique qui l'entoure.

Les caractéristiques et avantages de l'invention ressortiront de la description donnée ci-après à titre d'exemple, en référence aux dessins annexés.

La figure 1 est une coupe schématique d'un effluveur élémentaire selon l'invention,

La figure 2 représente une série d'effluveurs élémentaires montés en parallèle avec leur double circuit de refroidissement.

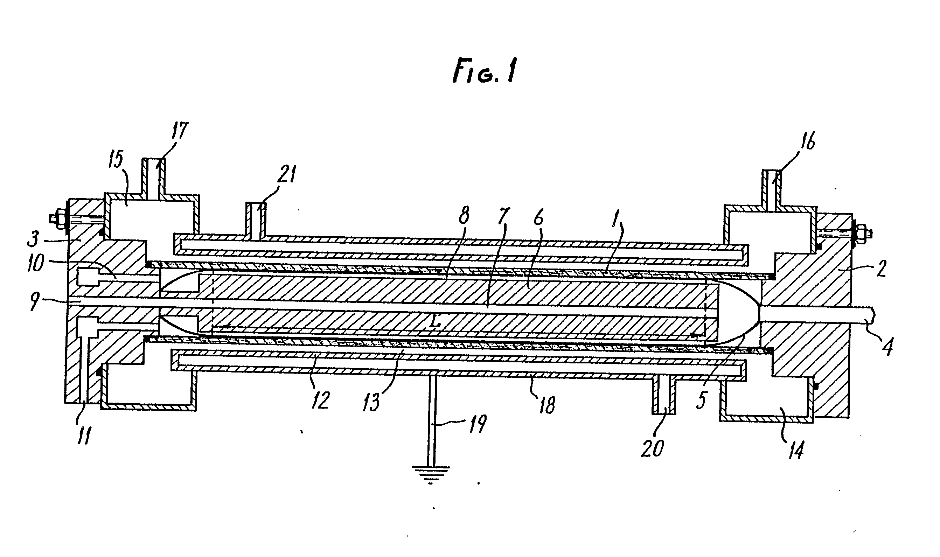

Ainsi qu'il apparaît sur la figure 1, l'effluveur objet de la présente invention est du type tubulaire. Il comporte une électrode haute tension 1, se présentant sous forme d'un tube en céramique métallisé intérieurement sur une longueur L. Ce tube en céramique est obtenu par la technique de l'isopressage de façon à réaliser un cylindre d'épaisseur constante de l'ordre de 4 mm et est, après cuisson, rectifié extérieurement de façon à obtenir une tolérance de ± 0,05 mm sur la valeur de son diamètre extérieur. Cette électrode est serrée entre deux pièces d'extrémité 2 et 3, en matière isolante, et est reliée à l'un de ses bouts par la borne 4 et par l'intermédiaire de la pièce 5 formant déflecteur de champ et objet du brevet français n° 2 406 606 de la Demanderesse, à une source de haute tension alternative. Un même déflecteur de champ ferme de manière non étanche l'autre extrémité de l'électrode.

A l'intérieur de cette électrode est disposée concentriquement une pièce cylindrique 6 en matière isolante, comportant suivant son axe un canal 7 de façon à aménager un espace annulaire 8 de quelques millimètres entre cette pièce et l'électrode 1. Le canal 7 est en communication avec un canal 9, percé dans l'axe de la pièce d'extrémité 3, qui comporte également un ou plusieurs canaux 10 en liaison avec l'espace annulaire 8 et la tubulure 11.

L'électrode en céramique 1 est entourée concentriquement d'un tube métallique 12, constituant l'électrode basse tension, de façon à réaliser un espace de décharge 13, de largeur optimisée suivant le gaz vecteur, et sa pression entre les deux électrodes. Cet espace de décharge est en communication avec deux boîtes d'extrémité 14 et 15 équipées respectivement d'une tubulure 16 et 17. L'électrode basse tension 12 est elle-même entourée d'un second tube métallique 18 relié électriquement à la terre par la borne 19 et muni de deux tubulures 20 et 21.

Le fonctionnement de l'effluveur est alors le suivant :

Une haute tension alternative est appliquée entre les bornes 4 et 19, tandis que le gaz soumis à l'effluve, oxygène pur, air atmosphérique ou air enrichi en oxygène, est admis dans l'intervalle de décharge 13, en communication avec la boîte 14 par la tubulure 16. Le mélange gazeux, dont la concentration en ozone est, pour une pression de fonctionnement donnée, une fonction univoque du paramètre de Becker (rapport de la puissance appliquée au débit de gaz), est recueilli dans la boîte 15 et sort de l'appareil par la tubulure 17.

L'évacuation de l'énergie thermique résultant de la dégradation de l'énergie électrique dans l'intervalle de décharge 13 est assurée de deux façons :

— par circulation d'eau déminéralisée dans l'espace annulaire 8, eau qui pénètre à l'intérieur de l'électrode haute tension 1 par les canaux 9 et 7 pour s'écouler le long de la paroi interne de cette électrode et ressortir par les canaux 10 et la tubulure 11. L'utilisation d'eau déminéralisée à forte résistivité comme fluide caloporteur permet de s'affranchir des dangers de courts-circuits,

— par circulation d'eau entre l'électrode basse tension 12 mise au potentiel de la terre et le tube métallique 18 qui l'entoure.

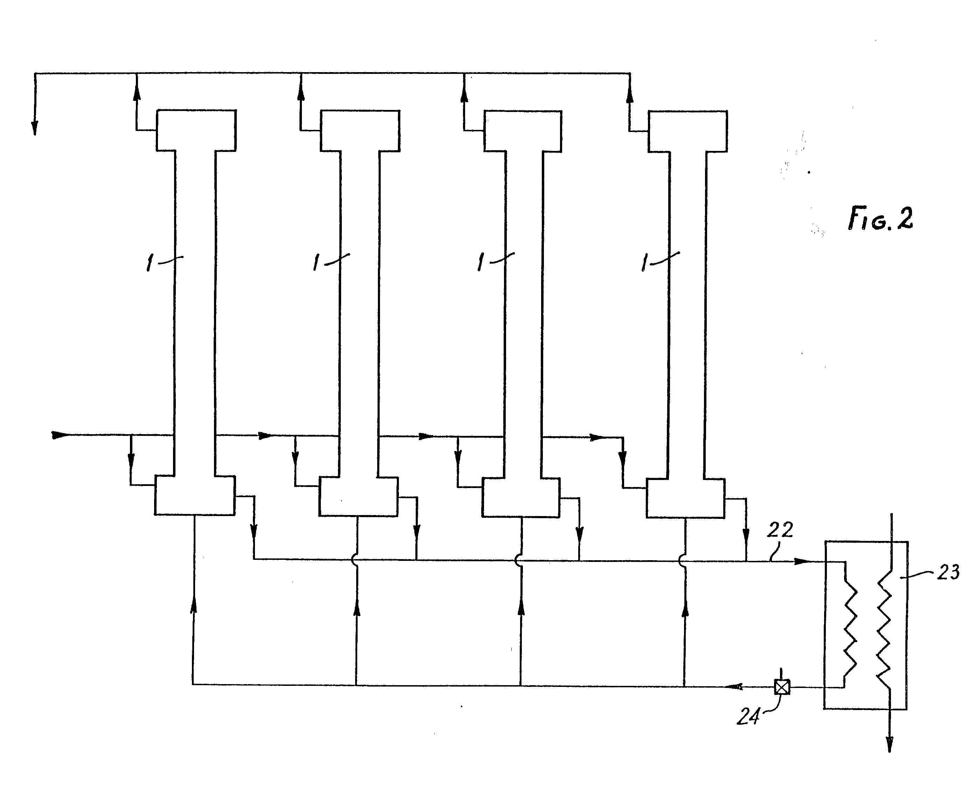

Sur la figure 2 ont été représentés plusieurs effluveurs 1 montés en parallèle avec leurs deux circuits de refroidissement. Le circuit 22 qui est celui de refroidissement des électrodes haute tension constitue une boucle fermée dans laquelle est inséré un échangeur de chaleur 23 et dans laquelle la qualité de l'eau déminéralisée qui y circule est en permanence contrôlée par une sonde de mesure de sa résistivité 24 qui provoque automatiquement la coupure de la haute tension d'alimentation de l'effluveur en cas de chute anormale de la valeur de cette résistivité.

En utilisant une céramique de permittivité relative $\varepsilon r = 17$, on a obtenu avec l'effluveur objet de la présente invention les résultats du tableau ci-après qui sont comparés à ceux donnés par un effluveur classique à diélectrique verre de permittivité relative $\varepsilon r = 7$, les deux appareils étant alimentés en air sec.

|  | Effluveur classique | Effluveur suivant l'invention |
|---|---|---|
| Intervalle de décharge (d) | 2,5 mm | 1 mm |
| Concentration d'ozone dans l'air ............. | 18 g/m$^3$ | 18 g/m$^3$ |
| Puissance appliquée au m$^2$ de diélectrique ........ | 3 kW | 8 kW |
| Production d'ozone par m$^2$ de diélectrique.......... | 170 g/h | 570 g/h |
| Consommation d'énergie spécifique :............. | 17,6 W/g/h | 14 W/g/h |

Ces résultats montrent bien l'intérêt de l'effluveur suivant l'invention dont la production d'ozone au m² de diélectrique est, pour une même concentration d'ozone dans l'air, plus de trois fois supérieure à celle obtenue avec un effluveur classique, et ce, pour une consommation énergétique spécifique (Watts par gramme d'ozone produit à l'heure) de 20 % inférieure.

Il a été trouvé par ailleurs qu'au plan énergétique, l'économie procurée par l'invention était d'autant plus importante que l'on cherchait à obtenir des concentrations élevées en ozone dans le gaz vecteur. Ainsi, pour une concentration d'ozone dans l'air de 30 g/m³ la puissance dépensée avec un effluveur classique est de 25 W/g/h, alors qu'elle n'est que de 17 W/g/h avec l'effluveur objet de l'invention, ce qui correspond à une économie d'énergie électrique de 32 %, le rapport des puissances appliquées à l'unité de surface demeurant le même que dans l'exemple précédent.

**Revendications**

1. Appareil générateur d'effluves électriques, en particulier pour la production d'ozone à partir d'oxygène pur, d'air atmosphérique ou d'air enrichi en oxygène, comportant au moins un tube diélectrique et dont l'électrode haute tension est constituée par un cylindre en céramique, revêtu intérieurement d'une couche métallique conductrice et entouré d'un tube métallique constituant une électrode basse tension, caractérisé en ce que le cylindre constituant l'électrode haute tension (1) est en céramique de haute permittivité, avantageusement comprise entre 7 et 30, d'épaisseur uniforme et au plus égale à 5 mm, de diamètre extérieur tel que l'intervalle (13) de décharge entre cette électrode haute tension et l'électrode basse tension (12) ait une largeur de 0,6 à 1,5 mm, suivant le gaz, ou le mélange de gaz, soumis à l'effluve.

2. Appareil suivant l'une quelconque des revendications précédentes, comportant un circuit de refroidissement, caractérisé en ce qu'il comporte un circuit fermé de refroidissement (22) par circulation d'eau déminéralisée à l'intérieur de l'électrode haute tension en céramique, la qualité de cette eau étant en permanence contrôlée par une sonde de mesure de résistivité.

3. Appareil suivant l'une quelconque des revendications précédentes, caractérisé en ce qu'il comporte un circuit de refroidissement de l'électrode basse tension par circulation d'eau entre cette électrode et le tube métallique qui l'entoure.

4. Appareil suivant l'une quelconque des revendications précédentes, caractérisé en ce que le

**0 172 756**

cylindre en céramique constituant l'électrode haute tension est réalisé suivant la technique · de l'isopressage et rectifié après cuisson.

**Claims**

1. An apparatus for generating electric effluves, in particular for the production of ozone from pure oxygen, atmospheric air or oxygen-enriched air, which comprises at least one dielectric tube and of which the high voltage electrode is constituted by a ceramic cylinder internally lined with a conductive metallic layer and surrounded by a metallic tube constituting a low voltage electrode, characterised in that the cylinder constituting the high voltage electrode (1) is composed of ceramic material of high permittivity, advantageously of between 7 and 30, has a uniform thickness of at most 5 mm, and an external diameter such that the discharge gap (13) between this high voltage electrode and the low voltage electrode (12) has a width of from 0.6 to 1.5 mm, depending on the gas or gas mixture subjected to the effluve.

2. An apparatus according to any one of the preceding claims, comprising a cooling circuit, characterised in that it comprises a closed circuit (22) for cooling by circulation of demineralised water inside the high voltage ceramic electrode, the quality of this water being permanently monitored by a resistivity measuring probe.

3. An apparatus according to any one of the preceding claims, characterised in that it comprises a circuit for cooling the low voltage electrode by circulation of water between this electrode and the metallic tube surrounding it.

4. An apparatus according to any one of the preceding claims, characterised in that the ceramic cylinder constituting the high voltage electrode is produced by the isopressing method and is rectified after baking.

**Patentansprüche**

1. Elektrisches Glimmentladungsgerät, insbesondere zur Erzeugung von Ozon aus reinem Sauerstoff, aus atmosphärischer Luft oder aus mit Sauerstoff angereicherter Luft, mit mindestens einer dielektrischen Röhre, deren Hochspannungselektrode durch einen Zylinder aus keramischem Material gebildet ist, der innen mit einer leitenden metallischen Schicht überzogen und von einem metallischen Rohr umgeben ist, welches die Niederspannungselektrode bildet, dadurch gekennzeichnet, daß der die Hochspannungselektrode (1) bildende Zylinder aus einem Keramikmaterial hoher dielektrischer Leitfähigkeit von vorzugsweise zwischen 7 und 30 gebildet ist, eine gleichmäßige Dicke von höchstens gleich 5 mm aufweist und einen Außendurchmesser besitzt, daß der Abstand (13) der Entladung zwischen dieser Hochspannungselektrode und der Niederspannungselektrode (12) eine Breite von 0,6 bis 1,5 mm entsprechend dem Gas oder dem Gasgemisch aufweist, das bzw. die der Entladung unterzogen ist.

2. Gerät nach einem der vorhergehenden Ansprüche, mit einem Kühlkreis, dadurch gekennzeichnet, daß der Kühlkreis einen geschlossenen Kühlkreis (22) mit Umwälzung von entmineralisiertem Wasser im Inneren der Hochspannungselektrode aus Keramik enthält, wobei die Wasserqualität permanent von einem Widerstandsmeßfühler kontrolliert wird.

3. Gerät nach einem der vorhergehenden Ansprüche, dadurch gekennzeichnet, daß das Gerät einen Kühlkreis für die Niederspannungselektrode mit Umwälzung von Wasser zwischen dieser Elektrode und dem diese umgebenden Metallrohr umfaßt.

4. Gerät nach einem der vorhergehenden Ansprüche, dadurch gekennzeichnet, daß der Zylinder aus keramischem Material, der die Hochspannungselektrode bildet, nach einem Isopreßverfahren hergestellt und nach dem Brennen berichtigt wird.

Fig. 1

Fig.2